Europäisches Patentamt

European Patent Office

Office européen des brevets

(19)

(11) **EP 0 948 442 B1**

(12) **EUROPÄISCHE PATENTSCHRIFT**

(45) Veröffentlichungstag und Bekanntmachung des Hinweises auf die Patenterteilung:
**27.11.2002 Patentblatt 2002/48**

(51) Int Cl.⁷: **B64C 27/33**, B64C 27/48

(21) Anmeldenummer: **98958200.2**

(86) Internationale Anmeldenummer:
**PCT/DE98/03055**

(22) Anmeldetag: **20.10.1998**

(87) Internationale Veröffentlichungsnummer:
**WO 99/022990 (14.05.1999 Gazette 1999/19)**

(54) **FEDERELEMENT UND STÜTZLAGER FÜR HUBSCHRAUBERHECKROTOREN UND TRAGESTRUKTUREN ZUM EINSATZ IM WELTRAUM**

SPRING ELEMENT AND SUPPORT BEARING FOR HELICOPTER TAIL ROTORS AND SUPPORTING STRUCTURES FOR USE IN SPACE

ELEMENT FAISANT RESSORT ET PALIER D'APPUI POUR ROTORS DE QUEUE D'HELICOPTERE, ET STRUCTURES PORTEUSES A UTILISER DANS L'ESPACE

(84) Benannte Vertragsstaaten:
**FR GB IT**

(30) Priorität: **04.11.1997 DE 19748682**

(43) Veröffentlichungstag der Anmeldung:
**13.10.1999 Patentblatt 1999/41**

(73) Patentinhaber: **Eurocopter Deutschland GmbH**
**86609 Donauwörth (DE)**

(72) Erfinder: **BANSEMIR, Horst**
**D-81825 München (DE)**

(74) Vertreter: **Baum, Wolfgang, Dipl.-Ing. et al**
**Daimler-Benz AG,**
**Postfach 80 04 65**
**81663 München (DE)**

(56) Entgegenhaltungen:
**EP-A- 0 351 577           EP-A- 0 351 578**
**US-A- 4 541 777**

EP 0 948 442 B1

**Beschreibung**

Die vorliegende Erfindung betrifft ein Federelement für Stützlager, insbesondere von Hubschrauberheckrotoren, sowie ein Stützlager für einen Hubschrauberheckrotor oder für eine Tragestruktur zum Einsatz im Weltraum.

Stützlager mit elastischen Elementen werden insbesondere beim Bau von Hubschrauberrotoren verwendet. Lagerlose Heckrotoren von Hubschraubern bestehen im wesentlichen aus Gurten, die mit wenigen Schrauben am Rotormast befestigt sind. Die Gurte verlaufen im Inneren von Rotorblättern, deren Ende auf der Seite des Rotormastes eine Steuertüte aufweist. Die zur Steuerung notwendige Verdrehung der Rotorblätter wird durch eine Torsion der Steuertüte erreicht. Die Gurte verleihen dem Heckrotor die notwendige Festigkeit, und sie werden durch die bei der Rotation auftretenden Fliehkräfte und Biegemomente gedehnt. Bei einer Verdrehung eines Rotorblatts über die Steuertüte erfolgt eine Verdrillung des Gurts um bis zu 25°. Dabei muß eine Relativverdrehung zwischen der Steuertüte und dem Gurt gewährleistet scin, und gleichzeitig muß die Tüte in Querrichtung, d.h. in Schlagrichtung des Rotors, gestützt werden. Die Verbindung zwischen dem Gurt und der Steuertüte wird durch ein Stützlager hergestellt, durch das der Gurt in der Steuertüte gehalten wird. Durch die starken Flieh- und Biegekräfte, die an dieser Stelle des Rotors auftreten, sind die Stützlager hohen Beanspruchungen ausgesetzt.

Üblicherweise werden Elastomerlager als Stützlager verwendet, deren Stützelemente aus Lagen von Titan- oder Stahlplättchen bestehen, zwischen denen sich jeweils ein elastisches Material, beispielsweise Gummi, befindet. Der Gurt wird in der Mitte der Steuertüte zwischen gegenüberliegenden Elastomerlagerelementen gehalten. Aufgrund der starken Beanspruchungen müssen für derartige Elastomertütenstützlager besondere Materialien verwendet werden, und sie müssen darüberhinaus einen besonderen Aufbau aufweisen, um den Beanspruchungen Stand zu halten. Diese bekannten Elastomerlager sind deshalb außerordentlich teuer, da sie eine kostenintensive Entwicklung und Herstellung erfordern. Darüberhinaus weisen sie den Nachteil auf, daß sie ihre Steifigkeit und ihre Materialeigenschaften bei unterschiedlichen Temperaturen verändern. Die Folge sind eine verringerte Lebensdauer aufgrund zusätzlicher auftretender Spannungen.

Um die Herstellungkosten bei der Serienproduktion von Hubschrauberheckrotoren zu verringern, wurde in neueren Entwicklungen versucht, die Elastomerlager durch verdrehbare Stützen zu ersetzen. Ein derartiges Konzept ist in "DEVELOPMENT OF BEARINGLESS TAIL ROTORS", Huber et al., Two Day international Conference on Helicopter Yaw Control Concepts, 28. Februar 1990. London, beschrieben. Bei derartigen Stützelementen treten bei einer Relativverdrillung des Gurts jedoch ebenfalls sehr hohe Zusatzspannungen im Stützelement auf, was zu vorzeitiger Materialermüdung und erhöhter Bruchgefahr führt. Die Lebensdauer herkömmlicher Stützlager im Bereich von Hubschrauberheckrotoren ist somit beschränkt und kann nur durch aufwendige Materialzusammensetzungen in einem angemessenen Bereich gehalten werden.

Es ist daher die Aufgabe der vorliegenden Erfindung, die o.g. Nachteile zu überwinden und ein Federelement für Stützlager und ein Stützlager für Hubschrauberheckrotoren und Tragestrukturen zu schaffen, bei dem Herstellungskosten reduziert werden und eine sichere und dauerhafte, bewegliche Lagerung von Bauteilen bei hoher Stützkraft gewährleistet ist.

Diese Aufgabe wird gelöst durch das Federelement gemäß Patentanspruch 1 und das Stützlager gemäß dem unabhängigen Patentanspruch 13. Weitere vorteilhafte Merkmale, Aspekte und Details der Erfindung ergeben sich aus den abhängigen Ansprüchen, der Beschreibung und den Zeichnungen.

Das erfindungsgemäße Federelement für Stützlager umfaßt:

mindestens zwei voneinander beabstandete Auflageelemente zur Verbindung mit abzustützenden Bauteilen;

eine Stegplatte, die über ihre Breite die Auflageelemente verbindet,

wobei in der Stegplatte ein Paar von in Längsrichtung verlaufenden Längsstegen ausgebildet ist, die durch in Richtung der Breite verlaufende erste Verbindungsstege verbunden sind,
und wobei an einem zwischen den ersten Verbindungsstegen gelegenen Abschnitt mindestens eines Längsstegs, d. h. in einem Bereich des Längsstegs, der zwischen den Ansätzen der weiteren Verbindungsstege am Längssteg liegt, ein weiterer Verbindungssteg angeordnet ist, der sich nach außen in Richtung zu einem der Auflageelemente erstreckt, so daß bei einem auf das Federelement wirkenden Querbiegemoment eine Verdrillung des Längsstegs erfolgt.

Vorteilhafterweise sind die beiden Längsstege an ihren Enden durch jeweils einen ersten Verbindungssteg miteinander verbunden, wobei der weitere Verbindungssteg bevorzugt an einem zentralen Abschnitt bzw. in der Mtte des jeweiligen Längsstegs angeordnet ist. Dadurch wird ein rechteckiger Stegrahmen zwischen den Auflageelementen zur Aufnahme der Kräfte über die weiteren Verbindungsstege gebildet. Der weitere Verbindungssteg kann sich bis zum Auflageelement hin erstrecken und die Verbindung zum Auflageelement bilden, oder er kann mit einem weiteren Längssteg verbunden sein, der dann bevorzugt die Verbindung zum Auflageelement bildet. In diesem Fall ergibt sich eine besonders feste Verbindung zwischen der Stegplatte und dem angrenzenden Auflageelement, vorzugsweise über die gesamte Länge des weiteren Längsstegs.

Vorteilhafterweise hat die Stegplatte eine im wesentlichen rechteckige Form, wobei bevorzugt der gegenseitige Abstand der Bauteile durch die Breite der Stegplatte bestimmt wird, und wobei insbesondere die Längsstege und die Verbindungsstege durch mindestens einen in Längsrichtung verlaufenden Schlitz in der Stegplatte gebildet sind. Dadurch kann auf einfache Weise eine einstückige Stegplatte geformt werden, wodurch die Bruchgefahr und auch die Kosten reduziert werden, da sie sich auf einfache und rationelle Weise herstellen läßt. Vorteilhafterweise ist der weitere Verbindungssteg durch zwei Schlitze gebildet, die von den freien Rändern der Stegplatte aufeinander zu verlaufen.

Vorzugsweise haben die Auflageelemente Auflageflächen, die in entgegengesetzte Richtungen weisen, wobei die Stegplatte senkrecht zu den Auflageflächen angeordnet ist. Hierdurch können die auftretenden Kräfte von den Auflageflächen und der Stegplatte auf vorteilhafte Weise aufgenommen werden und es ergibt sich eine besonders hohe Stützkraft im Bereich des Federelements. Die Auflageflächen bzw. Auflageelemente können durch Klemmung, Klebung oder Verschraubung mit den abzustützenden Bauteilen verbunden werden. In den Auflageelementen bzw. Auflagetlächen für die Bauteile sind bevorzugt eine oder mehrere Dehnfugen angeordnet, die vorzugsweise in Querrichtung verlaufen. Dadurch können unterschiedliche Wärmeausdehnungen des Federelements gegenüber dem Bauteil mit dem es verbunden wird, ausgeglichen werden.

Bevorzugt ist die Länge 1 der Längsstege so gewählt, daß das Federelement die gewünschte Querbiegesteifigkeit hat, und die Breite b der Verbindungsstege und die Höhe h der Längsstege kann so gewählt sein, daß das Federelement die gewünschte Dehnsteifigkeit hat. Somit können die elastischen Eigenschaften des Federelements durch geeignete Auswahl der Abmessungen der verschiedenen Stege eingestellt werden. Dabei ist die Breite b der Verbindungsstege vorzugsweise ca. 1/15 bis 1/5 der Länge 1 der Längsstege, besonders bevorzugt ca. 1/8 bis 1/4 und insbesondere bevorzugt ca. 1/3 der Länge der Längsstege. Das Federelement ist bevorzugt aus einem Faserverbundwerkstoff hergestellt, wodurch eine sehr hohe Stützfestigkeit und vorteilhafte Materialeigenschaften bei besonders leichter Bauweise und geringen Kosten erreicht werden.

Gemäß einem weiteren Aspekt der Erfindung wird ein Stützlager geschaffen, das ein erfindungsgemäßes Federelement umfaßt. In dem erfindungsgemäßen Stützlager sind vorzugsweise zwei oder mehr Federelemente derart angeordnet, daß sie sich mit ihren Auflageelementen gegenüberliegen, um zwischen sich ein Bauteil zu halten, so daß das Bauteil schwenkbar gelagert ist. Dabei kann das Bauteil ein Gurt eines Hubschrauberheckrotors sein, der durch die Federelemente in einem Tütenlager gelagert ist. Mit einem derartigen erfindungsgemäßen Stützlager wird eine hohe Stützkraft zum Halten bzw. Positionieren des Gurtes in der Steuertüte erzielt, wobei der Gurt in Längsrichtung gegenüber dem Stützlager verdreht werden kann. Insbesondere werden die Herstellungskosten trotz hoher Stabilität, stabiler Lagerung und langer Lebensdauer reduziert.

Bei dem erfindungsgemäßen Stützlager können die Federelemente auch eine empfindliche Struktur mit einem Stützrahmen verbinden, vorzugsweise an drei Punkten. Dadurch kann eine besonders leichte Struktur mit geringer Festigkeit. die ansonsten einer großen Bruchgefahr ausgesetzt wäre, durch einen Stützrahmen gedämpft gelagert und stabilisiert werden. Dabei kann der Stützrahmen beispielsweise eine Tragestruktur zum Einsatz im Weltraum sein, und die empfindliche Struktur kann ein flächiges Gebilde, wie z.B. ein Weltraumspiegel oder ein Solarpanel sein.

Im folgenden werden bevorzugte Ausführungsformen der Erfindung beispielhaft anhand von Zeichnungen beschrieben, in denen

Fig. 1      eine schematische Ansicht eines lagerlosen Vierblattheckrotors ist, in dem das erfindungsgemäße Federelement eingesetzt werden kann;

Fig. 2a      eine Teilschnittansicht eines bekannten Vierblattheckrotors ist, der ein bekanntes Elastomer-Tütenstützlager aufweist;

Fig. 2b      eine Draufsicht auf den in Fig. 2a gezeigten Vierblattheckrotor ist;

Fig. 3      einen Querschnitt entlang der Linie A-A' durch den in Fig. 2b gezeigten Vierblattheckrotor im Bereich des bekannten Elastomertütenlagers schematisch darstellt;

Fig. 4      einen Querschnitt durch ein weiteres bekanntes Elastomertütenstützlager zeigt, mit einer Anordnung von Elastomerlagerelementen;

Fig. 5a      eine erste bevorzugte Ausführungsform des erfindungsgemäßen Federelements zeigt;

Fig. 5b      eine Vorderansicht der ersten bevorzugten Ausführungsform des erfindungsgemäßen Federelements ist;

Fig. 5c      eine Seitenansicht der ersten bevorzugten Ausführungform des erfindungsgemäßen Federelements ist;

Fig. 6      schematisch einen Querschnitt durch ein erfindungsgemäßes Stützlager eines Hubschrauberheckrotors zeigt;

**Fig. 7a** eine Vorderansicht eines erfindungsgemäßen Stützlagers zeigt, durch das ein Heckrotorgurt in einer Steuertüte positioniert ist;

**Fig. 7b** eine Seitenansicht des in Fig. 7a gezeigten Stützlagers ist;

**Fig. 8a** eine weitere Ausführungsform des erfindungsgemäßen Federelements zeigt;

**Fig. 8b** eine Vorderansicht des in Fig. 8a gezeigten Federelements ist,

**Fig. 8c** eine Seitenansicht des in Fig.8a gezeigten Federelements ist; und

**Fig. 9** eine Darstellung eines Weltraumspiegels ist, der mit einer Tragestruktur verbunden ist.

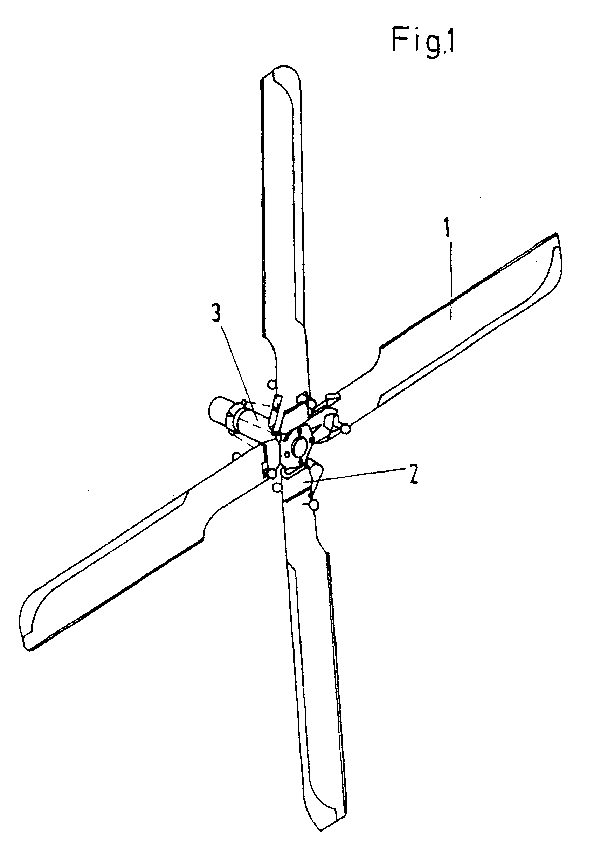

In Fig. 1 ist ein typischer lagerloser Vierblattheckrotor dargestellt, der üblicherweise mit einem Elastomer-Tütenlager ausgerüstet ist und gemäß der vorliegenden Erfindung mit dem erfindungsgemäßen Stützlager und Federelement ausgerüstet wird. Der Heckrotor weist vier Rotorblätter 1 auf, die jeweils über eine Steuertüte 2 mit dem Rotormast 3 verbunden sind. Im Inneren der Rotorblätter 1 befinden sich durchgehende Gurte, die die Zentrifugal- und Biegekräfte aufnehmen.

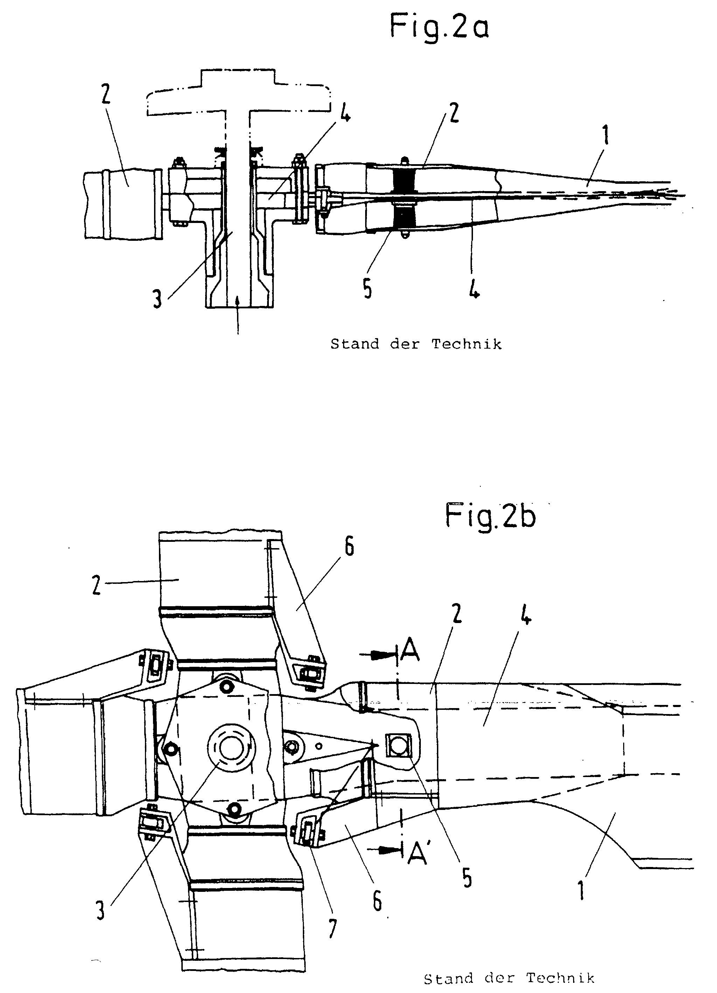

Fig. 2a zeigt einen Teilschnitt durch einen bekannten Vierblattheckrotor. Innerhalb des Rotorblatts 1 und der Steuertüte 2 wird der Gurt 4 durch ein bekanntes Elastomertütenstützlager 5 gehalten. Bei einer Verdrehung der Steuertüte 2 bleibt der Gurt 4 im Bereich des Rotormastes 3 in seiner Lage unverändert, während er im Bereich der Steuertüte 2 und des Rotorblatts 1 verdrillt wird. Dabei kann eine Verdrillung des Gurts 4 um bis zu 25° gegenüber seiner Lage im Bereich des Rotormastes 3 erfolgen.

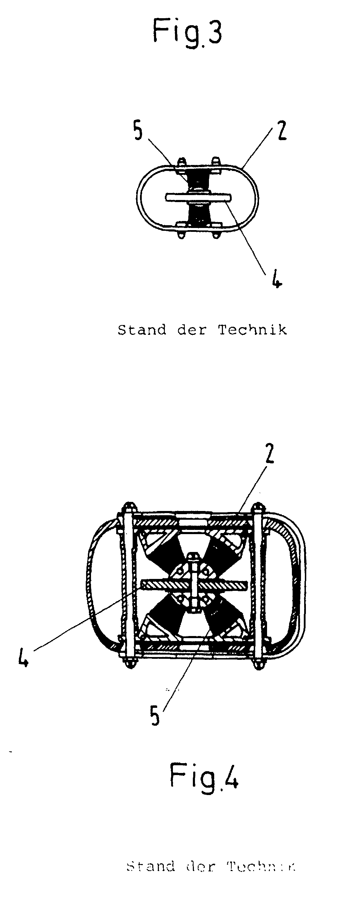

Fig. 2b zeigt eine Draufsicht auf die bekannte Anordnung. Die Steuertüten 2 werden jeweils durch Blatthebel 6 verdreht, die über Steuerstangen, welche am Steuerstangenlager 7 ansetzen, betätigt werden. Der durch die gestrichelte Linie dargestellte Gurt 4 verläuft durchgehend durch jeweils zwei gegenüberliegende Rotorblätter 1 und wird im Bereich der Steuertüte 2 in seiner Mitte durch das Elastomer-Tütenlager 5 abgestützt. Der Querschnitt durch die bekannte Steuertüte entlang der Linie A-A' ist schematisch in Fig. 3 dargestellt.

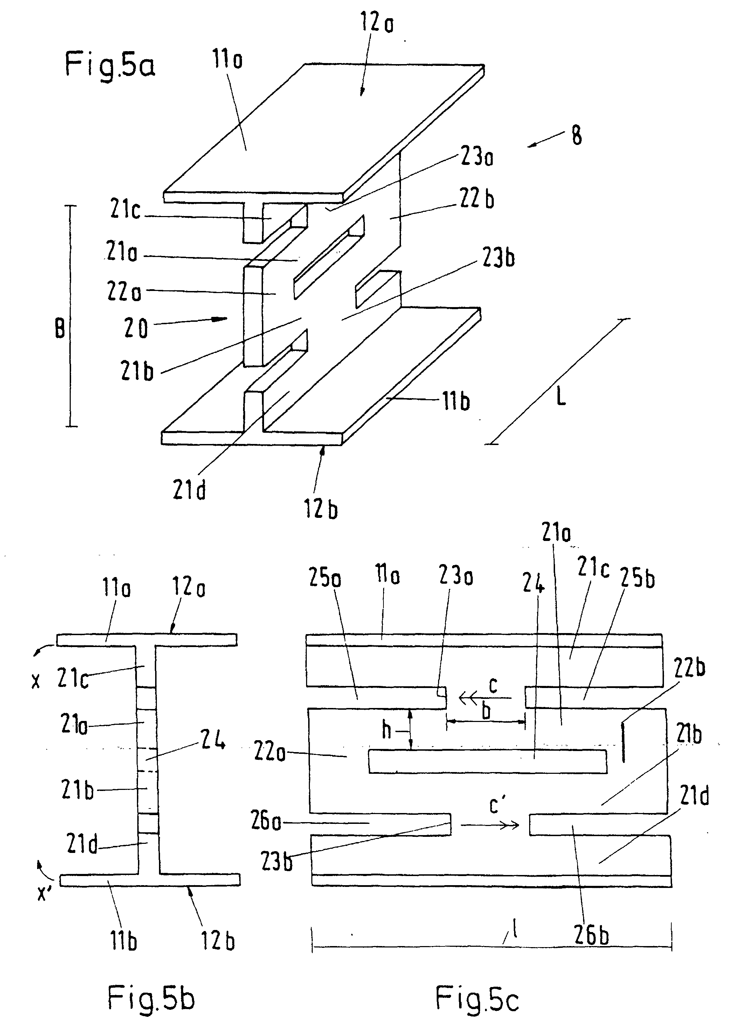

Eine weitere bekannte Anordnung von bekannten Elastomerlagerelementen in einem Stützlager ist in Fig. 4 dargestellt. Dabei wird der Gurt 4 auf seinen beiden Seiten durch die bekannten Elastomerelemente im Zentrum der Steuertüte gehalten. Um den hohen Beanspruchungen Stand zu halten, sind diese bekannten Elastomerlager aus Lagen von.Titan- oder Stahlplättchen gebildet.. zwischen denen sich jeweils eine Gummilage befindet. Die Nachteile dieser bekannten Lagerung wurden oben diskutiert.

Die Fig. 5a bis 5c zeigen eine erste bevorzugte Ausführungsform des erfindungsgemäßen Federelements, das gemäß der vorliegenden Erfindung anstelle der bekannten Elastomerlagerelemente in der Steuertüte 2 des zuvor gezeigten Hubschrauberheckrotors eingesetzt ist, um den Gurt 4 zu lagern bzw. zu halten. Das Federelement 8 hat in seinem zentralen Teil eine Stütz- bzw. Stegplatte 20, die zur Aufnahme der Kräfte zwischen zwei voneinander beabstandeten Bauteilen vorgesehen ist, um die Bauteile gegenseitig abzustützen bzw. ihren Abstand im Bereich der Stegplatte 20 konstant zu halten. Dabei bestimmt die Breite 13 der Stegplatte 20 den Abstand zwischen den Bauteilen. In Längsrichtung hat die Stegplatte die Länge L, so daß sie sich im eingebauten Zustand zwischen den abzustützenden Bauteilen in Längsrichtung erstreckt. Aus Fig. 5c ist zu entnehmen, daß die Stegplatte eine rechteckige äußere Form hat, wobei sie durch rechteckige Schlitze 24, 25a, 25b, 26a, 26b in parallele Längsstege 21a bis d und Quer- bzw. Verbindungsstege 22a, 22b und 23a, 23b unterteilt ist.

Dabei trennt der in Längsrichtung der Stegplatte 20 verlaufende zentrale rechteckige Schlitz 24 die beiden Längsstege 21a, 21b, die an ihren Enden durch die Verbindungsstege 22a, 22b, die senkrecht zu den Längsstegen verlaufen und sich in Richtung der Breite der Stegplatte erstrecken, miteinander verbunden sind. Somit bilden die Längsstege 21a, 21b und die Verbindungsstege 22a, 22b einen rechteckigen, flachen Rahmen. In einem zentralen Bereich jedes Längssteges 21a, 21b bzw. in seiner Mitte ist jeweils ein weiterer Verbindungssteg 23a bzw. 23b angeordnet, der die Verbindung zu den weiteren benachbarten. Längsstegen 21c bzw. 21d herstellt. Dabei befinden sich die zentralen Verbindungsstege 23a, 23b in der Mitte zwischen den benachbarten Längsstegen 21a, 21c bzw. 21b, 21d. Die zentralen Verbindungsstege 23a und 23b sind zwischen Paaren von Längsschlitzen 25a, 25b bzw. 26a, 26b ausgeformt, die sich von den freien Rändern der Stegplatte 20 paarweise nach innen zu erstrecken.

Fig. 5a zeigt, daß an beiden längsseitigen Kanten der Siegplatte 20 plattenförmige Auflagen bzw. Auflageplatten 11a, 11b angeordnet sind, die jeweils eine Auflagefläche 12a bzw. 12b zur Verbindung mit abzustützenden bzw. zu haltenden Bauteilen bzw. weitere Bau- oder Lagerelementen aufweisen. Die Auflageplatten 11a, 11b und die dazugehörigen Auflageflächen 12a bzw. 12b sind parallel zueinander ausgerichtet, wobei die Auflageflächen 12a, 12b in entgegengesetzte Richtungen weisen. Das Federelement kann beispielsweise derart in einem Tütenstützlager eines Hubschrauberheckrotors eingesetzt sein, daß die Auflagefläche 12a mit einer Innenfläche der Steuertüte 2 fest verbunden ist und die gegenüberliegende Auflagefläche 12b mit einer Seite des Gurts 4 fest verbunden ist.

Das Pederelement ist doppel-T-förmig, wobei sich die Stegplatte 20 senkrecht zwischen den beiden parallel zueinander ausgerichteten Auflageplatten 11a, 11b erstreckt. Durch die besondere Anordnung der Längsstege 21a bis d und der Verbindungsstege 22a, 22b und 23a, 23b ist das Federelement in Querrichtung biegsam. In Fig. 5b ist die mögliche Biegerichtung durch die beiden Pfeile X, X' dargestellt. Bei einem auf das Federelement wirkenden Querbiegemoment $M_{quer}$, das in Fig. 5c im Bereich der Steplatte 20 durch die Doppelpfeile C, C' entsprechend der RECHTEN-HAND-REGEL dargestellt ist, erfolgt eine Umwandlung der Biegemomente in Drillmomente im Längssteg 21a, 21b bzw. im mittleren Bereich des Federelements. Dabei werden die Längsstege 21a und 21b in ihrem Verlauf verdrillt, jeweils im Bereich zwischen den ersten Verbindungsstegen 22a, 22b und den diesen gegenüberliegenden und hierzu versetzt angeordneten weiteren Verbindungsstegen 23a bzw. 23b.

Die Querbiegesteifigkeit des Federelements wird wesentlich durch die Länge 1 der Längsstege 21a, 21b beeinflußt. Je größer die Länge 1 eines Längssteges ist. desto leichter kann er verdrillt werden und desto geringer ist seine Querbiegesteifigkeit. Das Verhältnis zwischen dem Verdrillwinkel φ und der Länge 1 ergibt sich aus Integration der Formel

$$\varphi' = \frac{M_I}{G \cdot I_I},$$

wobei

$\varphi'$     $= \frac{d\varphi}{dx}$ = Verdrillwinkel pro Längeneinheit,

$M_T =$     Torsionsmoment,

$G =$     Schubmodul, und

$I_T$     = Torsionsträgheitsmoment.

Daraus ergibt sich

$$\varphi = \int \frac{M_T}{G \cdot I_I} \, dx = \frac{M_T}{G \cdot I_T} \cdot I$$

Somit kann durch geeignete Auswahl der Länge 1 der Längsstege 21a, 21b die jeweils gewünschte bzw. optimale Querbiegesteifigkeit des Federelements erreicht werden.
Die Querdehnsteifigkeit bzw. Stützfestigkeit des Federelements wird wesentlich durch die Breite b der Verbindungsstege 23a, 23b und durch die Höhe h der Längsstege 21a, 21b beeinflußt. Durch geeignete Auswahl der Parameter b und h wird das Federelement mit der gewünschten bzw. optimalen Querdehnsteifigkeit und Stützfestigkeit geschaffen. Somit ergibt sich ein querbiegeweiches Stützlager- bzw. Federelement mit der Möglichkeit der Steifigkeitsbeeinflussung durch Wahl der Abmessungen, insbesondere der Länge 1 der Längsstege bzw. der Länge L des Federelements.

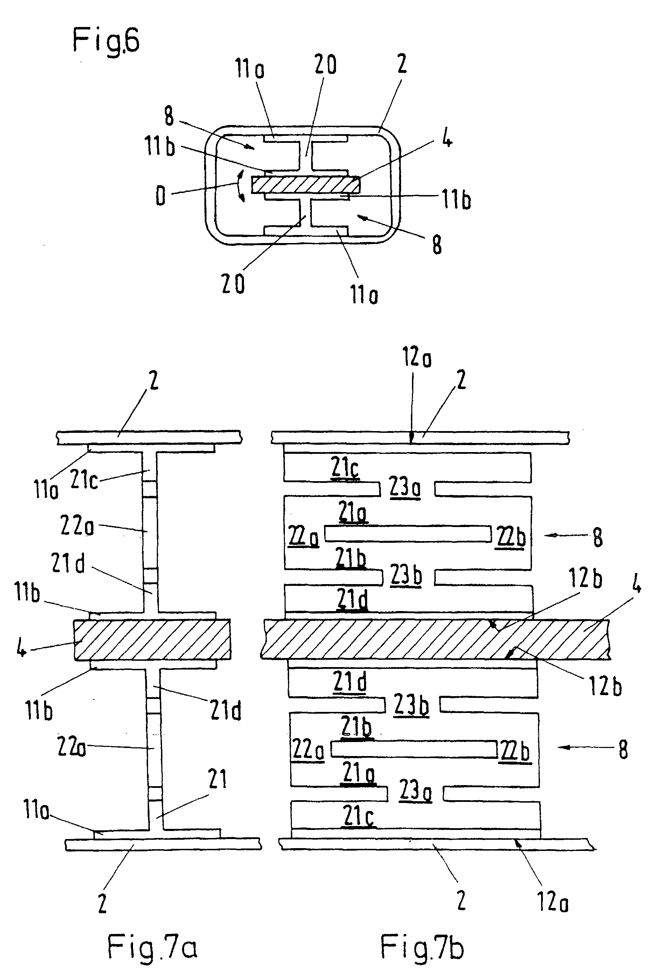

In Fig. 6 ist schematisch ein Querschnitt durch ein erfindungsgemäßes Tütenstützlager im Bereich der Steuertüte 2 eines lagerlosen Hubschrauberheckrotors dargestellt, wie er z.B. in Fig. 1 gezeigt ist. Dabei bildet die Steuertüte 2 in ihrem Inneren einen Hohlraum, in dessen Zentrum der Gurt 4 durch zwei erfindungsgemäße Federelemente 8 positioniert ist. Die Federelemente 8 stützen den Gurt 4 von beiden Seiten gegenüber der Innenwand der Steuertüte 2 ab. Die Auflageplatten 11a der Federelemente 8 sind durch Klebung und/oder Schraubung mit der Steuertüte 2 verbunden, und die Auflageplatten 11b der Federelemente 8 sind durch Klebung und/oder Schraubung mit einer Oberfläche des Gurts 4 verbunden. Durch eine derartige Lagerung des Gurts 4 zwischen zwei Federelementen 8 wird eine Redundanz erreicht, d.h. bei einem Ausfall der Funktion eines Federelements, beispielsweise durch Materialermüdung oder Bruch, ist der Gurt 4 weiterhin durch die Wirkung des zweiten Federelements fest in der Steuertüte 2 positioniert.

Die Stegplatten 20 der Federelemente 8 sind senkrecht zum Gurt 4 ausgerichtet und setzen im Zentrum des Gurtes 4 an. Aufgrund der Querbiegeweichheit der Federelemente 8 ist ein Verdrillen des Gurts 4 um seine Längsachse innerhalb der Steuertüte 2 möglich. Die Drillbewegung ist durch den Doppelpfeil D in Fig. 6 dargestellt.

In den Figuren 7a und 7b sind vergrößerte Ausschnitte der Vorderansicht und der Seitenansicht des erfindungsgemäßen Stützlagers gezeigt. Die beiden Federelemente 8 sind symmetrisch beidseitig des Gurtes 4 des Heckrotors angeordnet und halten diesen zwischen ihren sich gegenüberliegenden Auflageflächen 12b. Dabei sind die jeweiligen Stützwände der Steuertüte 2, die Auflageflächen 12a und 12b der Federlemente 8 und die Stützflächen am Heckrotorgurt 4 parallel zueinander ausgerichtet. Das Tütenstützlager bzw. die erfindungsgemäßen Federelemente sind aus einem Faserverbundwerkstoff hergestellt, wodurch eine möglichst leichte Bauweise erzielt wird, Es ist aber auch denkbar, sie z.B. aus Metall zu fertigen.

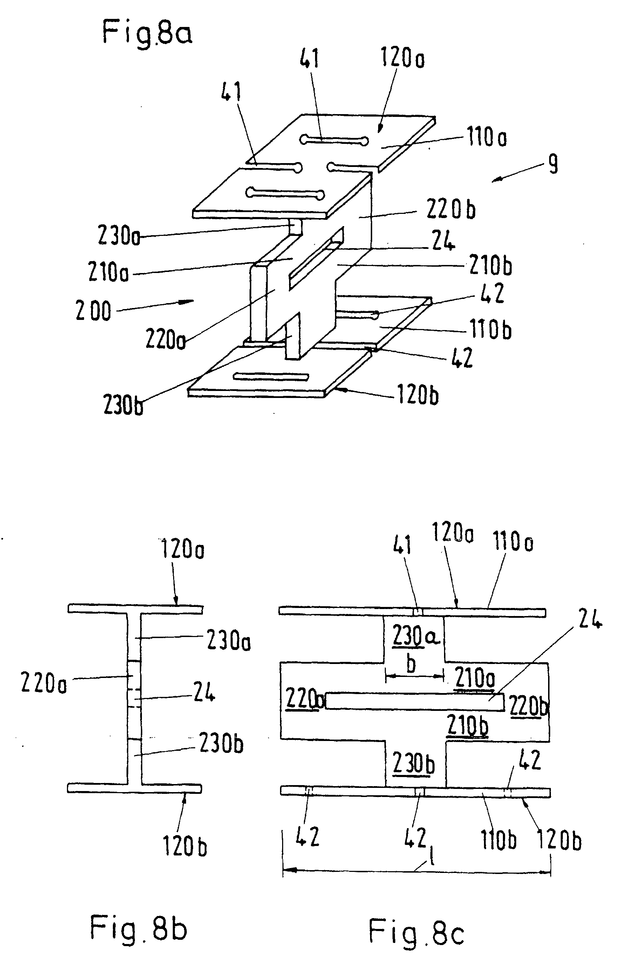

Figur 8a zeigt eine weitere Ausführungsform des erfindungsgemäßen Federelements. In dieser Ausführungsform ist die Stegplatte 200 mit Auflageplatten 110a, 110b versehen, deren jeweils außenliegende Seiten als Auflageflächen 120a, 120b ausgebildet sind, in denen in Querrichtung des Federelements verlaufende rechteckige Dehnfugen 41 bzw. 42 angeordnet sind. Durch die Dehnfugen 41, 42 wird erreicht, daß unterschiedliche Wärmeausdehnungskoeffizienten des Federelements 9 und des Bauteils, mit dem es verbunden wird, nicht zu Spannungen bzw. Rissen oder zu einer Lösung der Verbindung führen. Durch die Dehnfugen 41, 42 kann sich das Federelement 9 an auftretende Relativbewegungen zwischen den Bauteilen bzw zwischen den Bauteilen und dem Stützlager anpassen.

Die Stegplatte 200 weist lediglich zwei Längsstege 210a und 210b auf, deren Enden durch Verbindungsstege 220a und 220b verbunden sind. Die weiteren Verbindungsstege 230a und 230b die jeweils in der Mitte eines Längsstegs 210a, 210b ansetzen,sind direkt mit den Auflageplatten 110a bzw. 110b verbunden, ohne daß sich weitere Längsstege zwischen den weiteren Verbindungsstegen 230a, 230b und den Auflageplatten 110a bzw. 110b befinden. Somit hat die Stegplatte 200 die Form eines breiten, flächigen Kreuzes, dessen Querbalken durch einen Schlitz in zwei parallel verlaufende Bereiche bzw. Platten oder Stege unterteilt ist.

In den Figuren 8b und 8c ist das Federelement 9 gemäß der zweiten Ausführungsform in einer Vorder- bzw. Seitenansicht gezeigt. Das Verhältnis der Breite b der Verbindungsstege 23a, 23b zur Länge 1 der Längsstcge ist ca. 1 : 5, wobei allgemein ein Bereich von 1 : 4 bis 1 : 8 besonders bevorzugt wird. Das Federelement kann in Längsrichtung verlängert sein, um das Verhältnis der Breite b der Verbindungsstege 23a, 23b zur Länge L des Federelements 9 bzw. zur Länge 1 der Längsstege 21a, 21b optimal anzupassen. Somit kann die Steifigkeit des Federelements durch Wahl der Abmessungen, z.B. in Längsrichtung, optimal angepaßt werden. Die Dehnfugen 41 und 42 ermöglichen eine bessere Anbindung an die Heckrotorgurte, die beispielsweise durch starke Flieh- und/oder Biegekräfte gedehnt werden, wobei die Anbindung durch Klebung, Klemmung oder Schraubung erfolgen kann.

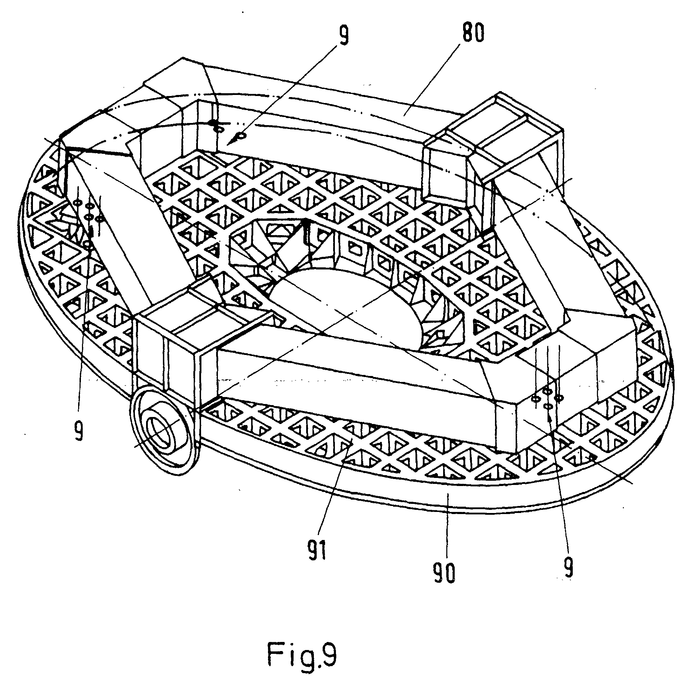

In Figur 9 ist ein hochgenauer Weltraumspiegel mit einer Rahmenstützstruktur dargestellt. Die Rahmenstützstruktur 80 ist hochmodul- kohlefaserverstärkt und der Spiegel 90 weist an seiner Rückseite Verstärkungsrippen 91 auf, die wabenartig ausgestaltet sind. Der Spiegel besteht aus einer SIC-infiltrierten Kohlufaserverbundstruktur. Die Rahmenstützstruktur 80 ist mit dem Spiegel 90 durch drei erfindungsgemäße Federelemente 9 verbunden, wie sie oben diskutiert wurden. Durch die querbiegeweichen und schubsteifen Federelemente als Verbindungselemente können auch kleine Relativbewegungen zwischen der Rahmenstützstruktur 80 und dem Spiegel 90 ausgeglichcn werden. Dabei ist auch eine S-förmige Verbiegung der Stegplatte 20 bzw. 200 über ihre Breite möglich, so daß ein gegenseitiger Versatz der beiden zu verbindenden Bauteile quer zur Stegplatte erfolgen kann, ohne daß dadurch Brüche. Risse oder andere Beeinträchtigungen im Federelement oder den damit verbundenen Feilen auftreten. Die Verbindung zwischen der Rahmenstützstruktur 80 und dem Spiegel 90 durch das erfindungsgemäße Federelement 9 erfolgt an drei Punkten, wodurch eine spannungsfreie, stabile Lagerung des Spiegels 90 an der Rahmenstützstruktur 80 möglich ist.

Die rechteckigen oder quadratischen Auflageplatten 110b der Federelemente 9 sind in den Wabenhohlräumen eingepaßt, die zwischen den Verstärkungsrippen 91 ausgebildet sind. Durch die in den Auflageplatten 110b angeordneten Schlitze bzw. Dehnfugen 42, die im vorliegenden Fall quer zur Stegplatte 200 ausgerichtet sind, kann eine Veränderung der Abmessungen der einzelnen Wabenhohlräume, die z.B. aufgrund von Temperaturänderungen auftritt, ausgeglichen werden.

Mit der vorliegenden Erfindung werden Federelemente und Stützlager geschaffen, die hohen Beanspruchungen über einen langen Zeitraum Stand halten, eine hohe Querbiegeweichheit bei starker Querdehnsteifigkeit und Stützkraft haben, und darüber hinaus auf eine einfache, kostengünstige Weise hergestellt werden können.

Aufwendige Struktur- bzw. Stützelemente in der Luft- und Raumfahrttechnik können auf kostengünstige Weise ersetzt werden, wobei Schwachstellen vermieden werden und eine langlebige, sichere Lagerung von beweglichen Bauteilen. die starken Beanspruchungen ausgesetzt sind, ermöglicht wird. Die erfindungsgemäßen Federelemente 8, 9 weisen im Vergleich zu den bekannten Elastomerlagern den Vorteil auf, daß sie auch im Weltraum einsetzbar sind. Die erfindungsgemäßen Federelemente 8, 9 weisen eine hohe Stützkraft und ein besonders günstiges Verhältnis der Steifigkeiten auf, und sie ermöglichen eine drastische Verringerung der Herstellungskosten von lagerlosen Hubschrauberheckrotoren.

Die Erfindung ist jedoch nicht auf Federelemente und Stützlager im Bereich von Hubschrauberheckrotoren oder Raumfahrtspiegelen bzw. Weltraumstrukturen beschränkt. Sie ermöglicht allgemein eine stützende und dämpfende Lagerung von Bauteilen, die Schwenkbewegungen oder Relativbewegungen in Bezug auf eine Halterung ausführen, wobei der gegenseitige Abstand der Bauteile bzw. Lagerelemente konstant bleibt und eine hohe Stützkraft gewährleistet ist.

**Patentansprüche**

1. Federelement für Stützlager, insbesondere von Hubschrauberheckrotoren, **gekennzeichnet durch** mindestens zwei voneinander beabstandete Auflageelemente (11a, 11b; 110a, 110b) zur Verbindung mit abzustützenden Bauteilen (2, 4; 80, 90); eine Stegplatte (20; 200), die über ihre Breite die Auflageelemente (11a, 11b; 110a, 110b) verbindet, wobei in der Stegplatte ein Paar von in Längsrichtung verlaufenden Längsstegen (21a, 21b; 210a, 210b) ausgebildet ist, die **durch** in Richtung der Breite verlaufende erste Verbindungsstege (22a, 22b; 220a, 220b) verbunden sind, und wobei an einem zwischen den ersten Verbindungsstegen (22a, 22b; 220a. 220b) gelegenen Abschnitt mindestens eines Längsstegs (21a, 21b; 210a, 210b) ein weiterer Verbindungssteg (23a, 23b; 230a, 230b) angeordnet ist, der sich nach außen in Richtung zu einem der Auflageelemente (11a, 11b; 110a, 110b) erstreckt, so daß bei cinem auf das Federelement wirkenden Querbiegemoment eine Verdrillung des Längsstegs (21a, 21b; 210a, 210b) erfolgt.

2. Federelement nach Anspruch 1, **dadurch gekennzeichnet, daß** die beiden Längsstege (21a, 21b; 210a, 210b) an ihren Enden durch jeweils einen ersten Verbindungssteg (22a, 22b; 220a, 220b) miteinander verbunden sind, wobei jeweils der weitere Verbindungssteg (23a, 23b; 230a, 230b) in der Mitte des jeweiligen Längsstegs (21a, 21b; 210a, 210b) angeordnet ist.

3. Federelement nach Anspruch 1 oder 2, **dadurch gekennzeichnet, daß** der weitere Verbindungssteg (230a, 230b) die Verbindung zum Auflageelement (110a, 110b) bildet.

4. Federelement nach Anspruch 2, **dadurch gekennzeichnet, daß** der weitere Verbindungssteg (23a, 23b) mit einem weiteren Längssteg (21c, 21d) verbunden ist, der die Verbindung zum Auflageelement (11a, 11b) bildet.

5. Federelement nach einem der vorhergehenden Ansprüche, **dadurch gekennzeichnet, daß** die Stegplatte (20; 200) eine im wesentlichen rechteckige Form hat, wobei die Längsstege (21a. 21b) und die ersten Verbindungsstege (22a. 22b) durch mindestens einen in Längsrichtung verlaufenden Schlitz (24) in der Stegplatte (20) gebildet sind.

6. Federelement nach einem der vorhergehenden Ansprüche, **dadurch gekennzeichnet, daß** der weitere Verbindungssteg (23a, 23b) durch zwei Schlitze (25a, 25b, 26a, 26b) gebildet ist, die von den freien Rändern der Stegplatte (20) aufeinander zu verlaufen.

7. Federelement nach einem der vorhergehenden Ansprüche, **dadurch gekennzeichnet, daß** die Auflageelemente (11a, 11b, 110a, 110b) Auflageflächen (12a, 12b; 120a, 120b) aufweisen, die in entgegensetzte Richtungen weisen, wobei die Stegplatte (20; 200) senkrecht zu den Auflageflächen angeordnct ist.

8. Federelement nach einem der vorhergehenden Ansprüche, **dadurch gekennzeichnet, daß** in den Auflageelementen (110a, 110b) eine oder mehrere Dehnfugen (41, 42) angeordnet sind, die bevorzugt in Querrichtung verlaufen.

9. Federlement nach einem der vorhergehenden Ansprüche, **dadurch gekennzeichnet, daß** die Länge 1 der Längsstege (21a, 21b) so gewählt ist, daß das Federelement die gewünschte Querbiegesteifigkeit hat.

10. Federelement nach einem der vorhergehenden Ansprüche, **dadurch gekennzeichnet, daß** die Breite b der weiteren Verbindungsstege (23a, 23b) und die Höhe h der Längsstege (21a, 21b) so gewählt ist, daß das Federelement die gewünschte Dehnsteifigkeit hat.

11. Federelement nach einem der vorhergehenden Ansprüche, **dadurch gekennzeichnet, daß** die Breite b der weiteren Verbindungsstege (23a, 23b) 1/15 bis 1/3, vorzugsweise ein 1/8 bis 1/4, insbesondere bevorzugt ca. 1/5 der Länge 1 der Längsstege (21a, 21b) ist.

12. Federelement nach einem der vorhergehenden Ansprüche, **dadurch gekennzeichnet, daß** es aus cinem Faserverbundwerkstoff gefertigt ist.

13. Stützlager, insbesondere für einen Hubschrauberheckrotor oder eine Tragestruktur zum Einsatz im Weltraum, **dadurch gekennzeichnet, daß** es ein oder mehrere Federelemente nach einem der vorhergehenden Ansprüche umfaßt.

14. Stützlager nach Anspruch 13, **dadurch gekennzeichnet, daß** zwei oder mehr der Federelemente derart angeordnet sind, daß sie sich mit ihren Auflageelementen (11a, 11b; 110a, 110b) gegenüberliegen, um zwischen sich ein Bauteil (4) zu halten, so daß das Bauteil (4) schwenkbar gelagert ist.

15. Stützlager nach Anspruch 13 oder 14, **dadurch gekennzeichnet, daß** das Bauteil (4) ein Gurt eines Hubschrauberheckrotors ist, der durch die Federlemente in einem Tütenlager (2) gelagert ist.

16. Stützlager nach Anspruch 13 oder 14, **dadurch gekennzeichnet, daß** die Federelemente eine empfindliche Struktur mit einem Stützrahmen an vorzugsweise drei Punkten verbinden.

17. Stützlager nach Anspruch 16, **dadurch gekennzeichnet, daß** der Stützrahmen eine Tragestruktur (80) zum Einsatz im Weltraum ist und die empfindliche Struktur ein flächiges Gebilde ist, insbesondere ein Spiegel (90) oder ein Solarpanel.

**Claims**

1. Spring element for support bearings, in particular of helicopter tail rotors, **characterised by**
   at least two bearing elements (11a, 11b; 110a, 110b) that are spaced apart from each other for connection with components (2, 4; 80, 90) that are to be stayed;

a web plate (20; 200) which by way of its width connects the bearing elements (11a, 11b; 110a, 110b), with there being formed in the web plate a pair of longitudinal webs (21a, 21b; 210a, 210b) that extend in a longitudinal direction and which are connected by first connecting webs (22a, 22b; 220a, 220b) extending in the direction of the width,
and with there being arranged on a section of at least one longitudinal web (21a, 21b; 210a, 210b), which is situated between the first connecting webs (22a, 22b; 220a, 220b), a further connecting web (23a, 23b; 230a, 230b) which extends outwards in the direction of one of the bearing elements (11a, 11b; 110a, 110b) so that twisting of the longitudinal web (21a, 21b; 210a, 210b) ensues when there is a transverse bending moment acting on the spring element.

2. Spring element according to claim 1, **characterised in that** the two longitudinal webs (21a, 21b; 210a, 210b) are connected together at their ends by means of a respective first connecting web (22a, 22b; 220a, 220b), with the respective further connecting web (23a, 23b; 230a, 230b) being arranged in the centre of the respective longitudinal web (21a, 21b; 210a, 210b).

3. Spring element according to claim 1 or 2, **characterised in that** the further connecting web (230a, 230b) establishes the connection with the bearing element (110a, 110b).

4. Spring element according to claim 2, **characterised in that** the further connecting web (23a, 23b) is connected to a further longitudinal web (21c, 21d) that establishes the connection with the bearing element (11a, 11b).

5. Spring element according to one of the preceding claims, **characterised in that** the web plate (20; 200) has a substantially rectangular form, with the longitudinal webs (21a, 21b) and the first connecting webs (22a, 22b) being formed by means of at least one slot (24) extending in a longitudinal direction in the web plate (20).

6. Spring element according to one of the preceding claims, **characterised in that** the further connecting web (23a, 23b) is formed by two slots (25a, 25b, 26a, 26b) that extend towards each other from the free edges of the web plate (20).

7. Spring element according to one of the preceding claims, **characterised in that** the bearing elements (11a, 11b, 110a, 110b) have bearing areas (12a, 12b; 120a, 120b) which point in opposite directions, with the web plate (20; 200) being arranged perpendicularly with respect to the bearing areas.

8. Spring element according to one of the preceding claims, **characterised in that** one or more expansion joints (41, 42) preferably extending in a transverse direction are arranged in the bearing elements (110a, 110b).

9. Spring element according to one of the preceding claims, **characterised in that** the length 1 of the longitudinal webs (21a, 21b) is selected so that the spring element has the desired resistance to transverse bending.

10. Spring element according to one of the preceding claims, **characterised in that** the width b of the further connecting webs (23a, 23b) and the height h of the longitudinal webs (21a, 21b) are selected so that the spring element has the desired resistance to expansion.

11. Spring element according to one of the preceding claims, **characterised in that** the width b of the further connecting webs (23a, 23b) is 1/15 to 1/3, preferably 1/8 to 1/4, in particular preferably approximately 1/5 of the length 1 of the longitudinal webs (21a, 21b).

12. Spring element according to one of the preceding claims, **characterised in that** it is made of a fibre composite material.

13. Support bearing, in particular for a helicopter tail rotor or a supporting structure for use in space, **characterised in that** it comprises one or more spring elements according to one of the preceding claims.

14. Support bearing according to claim 13, **characterised in that** two or more of the spring elements are arranged in such a way that they lie opposite each other with their bearing elements (11a, 11b; 110a, 110b) in order to hold a component (4) between them so that the component (4) is swivel-mounted.

15. Support bearing according to claim 13 or 14, **characterised in that** the component (4) is a chord of a helicopter tail rotor which is mounted in a sleeve bearing (2) by means of the spring elements.

16. Support bearing according to claim 13 or 14, **characterised in that** the spring elements connect a sensitive structure to a support frame at preferably three points.

17. Support bearing according to claim 16, **characterised in that** the support frame is a supporting structure (80) for use in space and the sensitive structure is a planar formation, in particular a reflector (90) or a solar panel.

**Revendications**

1. Elément élastique pour palier d'appui, notamment pour les rotors arrière d'hélicoptères, **caractérisé par**

   - au moins deux éléments d'appui (11a, 11b ; 110a, 110b) écartés l'un de l'autre pour être reliés aux pièces à soutenir (2, 4 ; 80, 90),
   - une plaque formant entretoise (20 ; 200) qui relie les éléments d'appui (11a, 11b ; 110a, 110b) sur leur largeur,
   - la plaque formant entretoise comportant une paire d'entretoises longitudinales (21a, 21b ; 210a, 210b) dirigées dans la direction longitudinale et reliées par des premières entretoises de liaison (22a, 22b ; 220a, 200b) dirigées dans le sens de la largeur, alors que
   - sur un segment d'au moins une entretoise longitudinale (2 la, 21b ; 210a, 210b) situé entre les premières entretoises de liaison (22a, 22b ; 220a, 220b), une autre entretoise de liaison (23a, 23b ; 230a, 230b) s'étend vers l'extérieur en direction des éléments d'appui (11a, 11b; 110a, 110b) de sorte que sous l'effet d'un couple de flexion transversale agissant sur l'élément élastique, l'entretoise longitudinale (21a, 21b ; 210a, 210b) se vrille.

2. Elément élastique selon la revendication 1, **caractérisé en ce que**
   les deux entretoises longitudinales (21a, 21b ; 210a, 210b) sont reliées l'une à l'autre à leurs extrémités chaque fois par une première entretoise de liaison (22a, 22b ; 220a, 220b), et l'autre entretoise de liaison (23a, 23b ; 230a, 230b) se trouve au milieu de l'entretoise longitudinale respective (21a, 21b ; 210a, 210b).

3. Elément élastique selon l'une quelconque des revendications 1 ou 2, **caractérisé en ce que**
   l'autre entretoise de liaison (230a, 230b) réalise la liaison avec l'élément d'appui (110a, 110b).

4. Elément élastique selon la revendication 2, **caractérisé en ce que**
   l'autre entretoise de liaison (23a, 23b) est reliée à une autre entretoise longitudinale (21c, 21d) qui réalise la liaison avec l'élément d'appui (11a, 11b).

5. Elément élastique selon l'une quelconque des revendications précédentes, **caractérisé en ce que**
   la plaque formant entretoise (20 ; 200) a une forme essentiellement rectangulaire, les entretoises longitudinales (2 la, 21b) et les premières entretoises de liaison (22a, 22b) étant formées par au moins une fente (24) réalisée dans la plaque (20) dans la direction longitudinale.

6. Elément élastique selon l'une quelconque des revendications précédentes, **caractérisé en ce que**
   l'autre entretoise de liaison (23a, 23b) est formée par deux fentes (25a, 25b, 26a, 26b) qui se rejoignent à partir des bords libres de la plaque formant entretoise (20).

7. Elément élastique selon l'une quelconque des revendications précédentes, **caractérisé en ce que**
   les éléments d'appui (11a, 11b ; 110a, 110b) ont des surfaces d'appui (12a, 12b ; 120a, 120b) tournées dans des directions opposées et la plaque formant entretoise (20 ; 200) est perpendiculaire aux plaques d'appui.

8. Elément élastique selon l'une quelconque des revendications précédentes, **caractérisé par**
   un ou plusieurs joints de dilatation (41, 42) dans les éléments d'appui (110a, 110b), ces joints étant de préférence dirigés dans la direction transversale.

9. Elément élastique selon l'une quelconque des revendications précédentes, **caractérisé en ce que**
   la longueur 1 des entretoises longitudinales (21a, 21b) est choisie pour que l'élément élastique présente la rigidité de flexion transversale souhaitée.

10. Elément élastique selon l'une quelconque des revendications précédentes, **caractérisé en ce que**
    la largeur b des autres entretoises de liaison (23a, 23b) et la hauteur h des entretoises longitudinales (2 la, 21b) est choisie pour que l'élément élastique présente la résistance de dilatation souhaitée.

11. Elément élastique selon l'une quelconque des revendications précédentes, **caractérisé en ce que**
    la largeur b des autres entretoises de liaison (23a, 23b) représente entre 1/15 et 1/3 et de préférence entre 1/8 et 1/4, notamment de manière préférentielle environ 1/5 de la longueur 1 de l'entretoise longitudinale (21a, 21b).

12. Elément élastique selon l'une quelconque des revendications précédentes, **caractérisé en ce qu'**
    il est fabriqué d'une matière composite renforcée par des fibres.

13. Appui de support, notamment pour un rotor arrière d'hélicoptère ou une structure de support destinée à une application spatiale,
**caractérisé en ce qu'**
il comporte un ou plusieurs éléments élastiques selon l'une quelconque des revendications précédentes.

14. Appui de support selon la revendication 13,
**caractérisé en ce que**
deux ou plusieurs éléments élastiques sont installés pour que leurs éléments d'appui (11a, 1b ; 110a, 110b) soient opposés pour tenir entre une pièce (4), pour que cette pièce (4) soit montée pivotante.

15. Appui de support selon l'une quelconque des revendications 13 ou 14,
**caractérisé en ce que**
la pièce (4) est une ceinture de rotor arrière d'hélicoptère montée par les éléments élastiques dans un palier en forme de manchon (2).

16. Appui de support selon l'une quelconque des revendications 13 ou 14,
**caractérisé en ce que**
les éléments élastiques relient une structure sensible à un châssis d'appui, de préférence en trois points.

17. Appui de support selon la revendication 16,
**caractérisé en ce que**
le châssis d'appui est une structure porteuse (80) destinée à des applications spatiales et la structure sensible est une structure plate, notamment un miroir (90) ou un panneau solaire.

Fig.1

# Fig.2a

Stand der Technik

# Fig.2b

Stand der Technik

# Fig.3

Stand der Technik

# Fig.4

Stand der Technik

Fig.5a

12a

11a

23a

22b

B

21c

21a

22a

20

21b

23b

8

L

11b

21d

12b

Fig.5b

11a

12a

x

21c

21a

24

21b

21d

x'

11b

12b

Fig.5c

25a

11a

23a

24

21a

21c

25b

22b

c

b

h

22a

21b

26a

c'

21d

23b

26b

l

## Fig.6

## Fig.7a

## Fig.7b

Fig.8a

Fig.8b

Fig.8c

Fig.9